# EUROPÄISCHE PATENTSCHRIFT

(11) **EP 0 538 679 B1**
(45) Veröffentlichungstag und Bekanntmachung des Hinweises auf die Patenterteilung: **21.12.1994**
(21) Anmeldenummer: 92117161.7
(22) Anmeldetag: 08.10.1992
(51) Int. Cl.: B62D 31/00, B62D 29/00, B62D 27/02

(54) **Selbsttragende formsteife Fahrgastzelle eines Personenkraftwagens und Verfahren zu deren Herstellung**
Self-supporting rigid passenger enclosure of a passenger car and method for its construction
Compartiment passagers autoporteur rigide d'une voiture de transport de personnes et méthode de construction

(30) Priorität: 12.10.1991 DE 4133814
(43) Veröffentlichungstag der Anmeldung: 28.04.1993
(73) Patentinhaber: Adam Opel Aktiengesellschaft, 65428 Rüsselsheim (DE); General Motors Espana, S.A., Figueruelas (Zaragoza) (ES)
(72) Erfinder: Matthes, Peter, Dipl.-Ing., W-6501 Nieder-Olm (DE)
(74) Vertreter: Bergerin, Ralf, Dipl.-Ing.

(56) Entgegenhaltungen:
- DE-A- 3 035 333
- DE-C- 421 979
- FR-A- 2 342 195
- PATENT ABSTRACTS OF JAPAN vol. 13, No. 360 (M-858) 11. August 1989 & JP-A-01 118 321
- PATENT ABSTRACTS OF JAPAN vol. 13, No. 229 (M-831) 26. Mai 1989 & JP-A-01 044 233

## Beschreibung

Die Erfindung betrifft eine selbsttragende formsteife Fahrgastzelle eines Personenkraftwagens, insbesondere eines Kleinwagens, mit daran angesetzten vorderen und hinteren Endbereichen sowie ein Verfahren zur Herstellung der Fahrgastzelle.

Bei Personenkraftwagen ist es üblich, die Fahrgastzelle als ein selbsttragendes formsteifes Gebilde zu konzipieren, wobei die tragende Struktur des Aufbaues im allgemeinen aus tiefgezogenen Blechteilen zusammengesetzt ist, die insbesondere im Bereich der formstabilen Fahrgastzelle zu komplizierten hohlen Trägern zusammengesetzt und verschweißt sind. Die Herstellung einer solchen Fahrgastzelle ist überaus aufwendig, da mit teuren Tiefziehwerkzeugen paßgenaue Teile hergestellt werden, die in einem aufwendigen Montageprozeß durch Schweißen zusammengefügt werden und anschließend gereinigt, phosphatiert, lackiert und allseitig gegen Korrosion konserviert werden müssen.

Um insbesondere den Korrosionsschutzprozeß zu vereinfachen, wurde bereits vorgeschlagen, die tragende Struktur der Fahrgastzelle als Leichtmetallgußteil auszubilden und nur noch die verformbaren Endbereiche des Fahrzeuges aus Blechpreßteilen zu bilden, die dann lösbar mit der Fahrgastzelle verbunden sind (DE 30 35 333 / A 1).

Dabei ist aber nach wie vor die aus Leichtmetallguß bestehende tragende Struktur der Fahrgastzelle zu verkleiden, wobei als Verkleidungswerkstoff Kunststoffteile Verwendung finden sollen. Abgesehen davon, daß die Befestigungselemente zwischen der tragenden Struktur und den Kunststoffteilen wieder der Korrosion ausgesetzt sind, eignen sich Kunststoffteile nur unzureichend für Karosserieaußenteile, da sie insbesondere bei einem Seitenaufprall nur ein geringes Energieaufnahmevermögen haben. Außerdem bedürfen auch diese Verkleidungsteile aufwendiger Anpaß- und Montagearbeit.

Aus der DE-PS 421 979 ist es bereits bekannt, einen selbsttragenden Wagenkasten zusammen mit wesentlichen Aufbauteilen einstückig als Gußteil herzustellen. Ein solcher Wagenkasten würde aber keine verformbaren Sicherheitsbereiche aufweisen, auf die nach heutigen Erkenntnissen bei einem Kraftfahrzeug nicht verzichtet werden kann.

Der vorliegenden Erfindung liegt die Aufgabe zugrunde, eine selbsttragende formstabile Fahrgastzelle für einen Personenkraftwagen mit ansetzbaren verformbaren Endbereichen zu schaffen, die besonders einfach aus vorkonfektionierbaren Teilen herstellbar ist, keiner zusätzlichen Beplankung bedarf und mit geringem Aufwand gegen Korrosion schützbar ist. Des weiteren ist ein Verfahren darzustellen, mit dem die Fahrgastzelle besonders vorteilhaft herstellbar ist.

Erfindungsgemäß wird diese Aufgabe dadurch gelöst, daß die Fahrgastzelle von einem rohrartigen Körper mit über dessen Länge gleichbleibendem rohrartigen Profil gebildet ist, dessen Wandung im Querschnitt gesehen festigkeitsbedingte unterschiedliche Dicken und Strukturen aufweist, an dessen Seiten die erforderlichen Öffnungen für Türen, Fenster und dgl. eingeschnitten sind und dessen vordere Stirnseite mit einem Frontformschnitt und dessen hintere Stirnseite mit einem Heckformschnitt versehen sind und die Stirnseiten mittels eines vorderen bzw. eines hinteren Endbereiches verschlossen sind.

Vorzugsweise setzt sich der über die Länge der Fahrgastzelle gleichbleibende Querschnitt der Fahrgastzelle aus Leichtbauprofilen unterschiedlicher, über ihre Länge jedoch gleichbleibender Querschnitte zusammen.

Die Leichtbauprofile sind vorzugsweise in ihrem Querschnitt in an sich bekannter Weise doppelwandig ausgebildet und mit Stegen zwischen den Wänden versehen.

Die Hohlräume zwischen den doppelten Wänden sind vorteilhaft mit einem isolierenden und/oder dämpfenden Schaum aus Kunststoff ausgeschäumt.

Die Leichtbauprofile sind an ihren Rändern vorzugsweise formschlüssig derart miteinander verbunden, daß angeformte Paßfedern des einen Profils in entsprechende Nuten des anderen Profils eingeschoben sind.

Die formschlüssige Verbindung kann zusätzlich durch einen Klebstoff kraftschlüssig gemacht sein und/oder mittels eines Dichtmittels abgedichtet sein.

Die Leichtbauprofile sind vorzugsweise an sich bekannte extrudierte Leichtmetallprofile.

Die Leichtbauprofile können aber auch aus anderen Werkstoffen bestehen, wie z. B. aus einem faseramierten Kunststoff.

Der rohrartige Teil der Fahrgastzelle trägt in an sich bekannter Weise verformbare Endbereiche, welche gleichzeitig die Aggregateträger für Achsen und Motor umfassen und an Krafteinleitungspunkten mit der Fahrgastzelle verbunden sind, die offene Querschnitte des rohrartigen Teiles verschließen und so die Fahrgastzelle stabilisieren.

Der vordere Endbereich umfaßt neben den zur Aufnahme von Verformungsarbeit geeigneten Bauteilen einen Motor mit Getriebe, eine Vorderachse, einen kompletten Spritzwandbereich, eine Armaturentafel, ein Heizungs- und Belüftungsaggregat, nach vorne führende Fahrzeugbedienelemente einschließlich der Pedale sowie eine Windschutzscheibe und er verschließt somit die vordere Öffnung des rohrförmigen Teils.

Der hintere Endbereich umfaßt neben den zur Aufnahme von Verformungsarbeit geeigneten Bauteilen insbesondere einen Hinterachsschemel mit einer Hinterachse und eine Heckwand mit einer Heckscheibe und er verschließt die hintere Öffnung des rohrförmigen Teils.

Zur Herstellung der erfindungsgemäßen Fahrgastzelle ist ein rohrförmiger Querschnitt mit entsprechend den Festigkeitsanforderungen unterschiedlichen Wandstärken zu extrudieren, von der Länge dieses Rohrprofils sind Teile in der gewünschten Länge der Fahrgastzelle abzutrennen, in diese die erforderlichen seitlichen Öffnungen einzuschneiden, sie mit Front- und Heckformschnitten zu versehen und an diese Endbereiche zu befestigen.

Der rohrförmige Querschnitt kann jedoch auch gebildet werden durch das Zusammenfügen von jeweils im Querschnitt gleichbleibenden Leichtbauprofilen unterschiedlicher Querschnitte, die an ihren Längskanten miteinander verbunden einen rohrförmigen Querschnitt ergeben, von dem die gewünschte Länge der Fahrgastzelle abgetrennt, mit Front- und Heckformschnitt versehen wird und an dem die Endbereiche zu befestigen sind sowie die erforderlichen seitlichen Öffnungen eingeschnitten werden.

Vorteilhafterweise werden die aus den Türöffnungen herausgeschnittenen Teile nach Bearbeitung der Randbereiche und Anordnung von Dichtungen, Fenstern, Türaufhängungselementen und Schlössern als Türen der Fahrgastzelle verwendet.

Ausführungsbeispiele der Erfindung sind nachstehend anhand von Zeichnungen näher erläutert.

Es zeigen
- Fig. 1:: die schematisierte Seitenansicht eines kleinen Personenkraftwagens;
- Fig. 2:: einen Schnitt entlang der Linie A - A in Fig. 1;
- Fig. 3:: die Einzelheit bei X in Fig. 2 vergrößert;
- Fig. 4:: die schematisierte Seitenansicht eines weiteren Personenkraftwagens mit den Krafteinleitungspunkten in die Fahrgastzelle;
- Fig. 5:: den Personenkraftwagen nach Fig. 4 im Schnitt, wobei die linke Hälfte den vorderen Bereich und die rechte Hälfte den hinteren Bereich darstellen;
- Fig. 6:: die Einzelheit bei Y in Fig. 5.

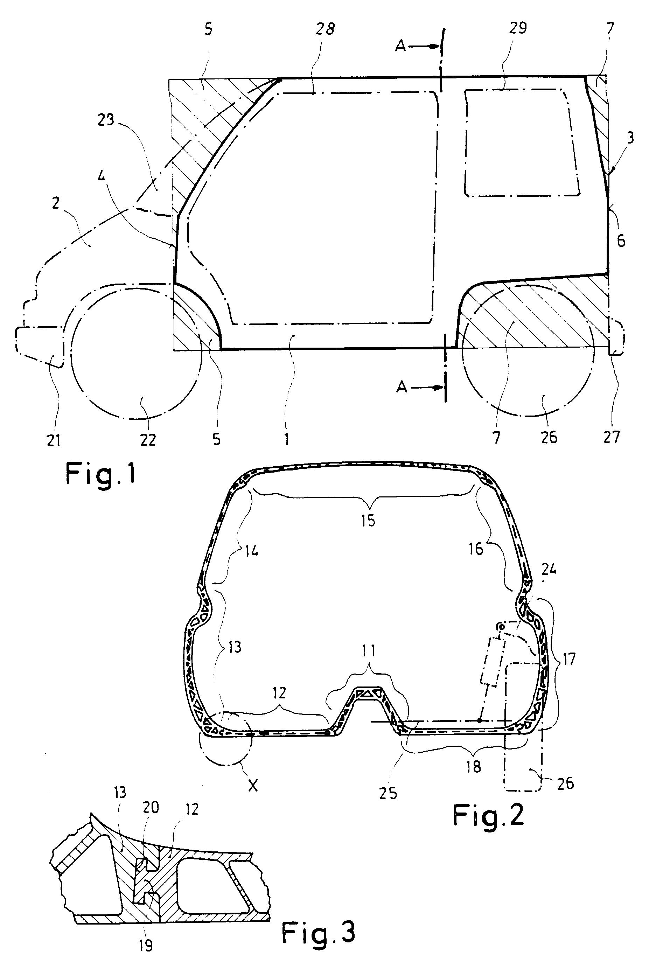

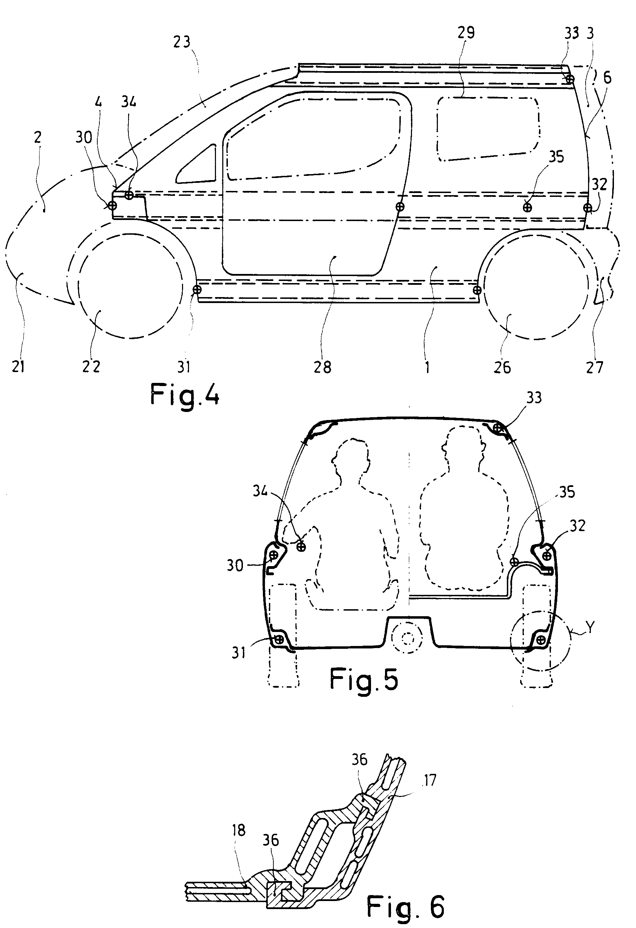

In Fig. 1 sowie in Fig. 4 ist jeweils ein Personenkraftwagen schematisiert dargestellt, wobei die Fahrgastzelle 1 besonders hervorgehoben ist. Die Fahrgastzelle 1 wird nach vorn von dem vorderen Endbereich 2 und nach hinten von dem hinteren Endbereich 3 abgeschlossen. Die Fahrgastzelle 1 stellt sich dabei als ein Rohr mit gleichbleibendem Querschnitt (Fig. 2) über die gesamte Länge dar. Das vordere Ende 4 der Fahrgastzelle 1 ist somit an den schraffiert dargestellten Bereichen 5 in Fig. 1 mit einem Frontformschnitt beschnitten. Ebenso ist das hintere Ende 6 mit einem Heckformschnitt beschnitten, wie das durch die schraffiert dargestellten Bereiche 7 in Fig. 1 ersichtlich ist.

Das die Fahrgastzelle 1 bildende Rohr, dessen Querschnitt am besten aus Fig. 2 ersichtlich ist, setzt sich zusammen aus in der Fahrzeuglängsrichtung verlaufenden extrudierten Leichtbauprofilen 11, 12, 13, 14, 15, 16, 17 und 18 aus Leichtmetall. Dabei wird aus den in Fig. 2 dargestellten Querschnitten der Leichtbauprofile 11 bis 18 deutlich, daß es sich im wesentlichen um doppelwandige Profile mit Verstärkungsstegen handelt, deren Querschnitte auf die jeweiligen Festigkeitserfordernisse ausgelegt sind. Die Leichtbauprofile 11 bis 18 sind an ihren Rändern formschlüssig miteinander verbunden, in dem z. B. das eine Leichtbauprofil 12 am Rand mit einem T-Profil 19 und das anschließende Leichtbauprofil 13 am Rand mit einer entsprechenden T-Nut 20 versehen ist (Fig. 3). Dabei sind jedoch auch andere formschlüssige Verbindungen möglich, wie dies z. B. Fig. 6 darstellt. Hier sind die Leichtbauprofile 17 und 18 durch ineinander geschobene im Profil eingeformte Haken 36 miteinander verbunden. Beide Leichtbauprofile 12 und 13 können so längs zusammengeschoben werden und bilden eine Einheit. Ähnlich gestaltet sind auch die Ränder der übrigen Leichtbauprofile, die so gemeinsam ein geschlossenes Rohrprofil mit gleichbleibendem Querschnitt bilden. Dieser Querschnitt entspricht dem Querschnitt der Fahrgastzelle 1, und deren Wandungen sind so ausgelegt, daß sie die von den Endbereichen 2, 3 eingeleiteten Kräfte sicher aufnehmen können.

Beispiele für Krafteinleitungspunkte sind in Fig. 4 und 5 dargestellt. Darin sind die Punkte 30 und 31 die Anbindungspunkte für den vorderen Endbereich 2. Die Anbindungspunkte für den hinteren Endbereich 3 sind die Punkte 32 und 33. Am Punkt 34 ist eines der vorderen Federbeine angelenkt. Der Punkt 35 kann ein Anlenkpunkt für eines der hinteren Federbeine bzw. für den Hinterachsschemel 24 sein.

Zur dauerhaften Verbindung der Leichtbauprofile 11 bis 18 untereinander ist an den Verbindungsstellen zweckmäßigerweise ein Klebstoff beigefügt. Erforderlichenfalls können auch Dichtungsmittel angewendet werden.

Die Erfindung ist nicht auf die Verwendung von Leichtmetall als Material für die Leichtbauprofile beschränkt; es können vielmehr auch andere Werkstoffe, wie z. B. faserverstärkte Kunststoffe eingesetzt werden. Auch die Verwendung verschiedener Werkstoffe nebeneinander für die einzelnen Leichtbauprofile 11 bis 18 ist möglich.

In die so gebildeten Wandungen der Fahrgastzelle 1 werden nachträglich Türöffnungen 28 und erforderlichenfalls Seitenfensteröffnungen 29 ausgeschnitten. Dabei wird der Türausschnitt zweckmäßigerweise als Material für die an Scharnieren oder dgl. wieder einzusetzende Tür genutzt. Die Tür selbst kann so in geschlossenem Zustand weiterhin Längskräfte innerhalb der Fahrgastzelle 1 übertragen.

Der vordere Endbereich 2 umfaßt neben den zur Aufnahme von Verformungsarbeit geeigneten Bauteilen, wie beispielsweise einer Stoßstange 21, auch einen Motor mit Getriebe, eine Vorderachse mit Lenkung und den Vorderrädern 22, eine Armaturentafel, ein Heizungs- und Belüftungsaggregat, die nach vorn führenden Fahrzeugbedienelemente wie z. B. Lenkrad und Pedale, eine Windschutzscheibe 23 und weitere Aggregate.

Der vordere Endbereich 2 überdeckt somit den gesamten Querschnitt der Fahrgastzelle 1, in dem er sich der Kontur des Frontformschnittes am vorderen Ende 4 anpaßt und an diesem befestigt ist, wobei die dynamischen Kräfte im wesentlichen über die Punkte 30, 31 eingeleitet werden.

Der hintere Endbereich 3 umfaßt im wesentlichen eine Heckwand mit einer Heckscheibe, einen Hinterachsschemel 24 mit einer Hinterachse 25 und Hinterrädern 26 sowie den zur Aufnahme von Verformungsarbeit geeigneten Bauteilen, wie z. B. einer Heckstoßstange 27.

Der hintere Endbereich 3 überdeckt den gesamten Querschnitt der Fahrgastzelle 1, in dem er sich der Kontur des Heckformschnittes am hinteren Ende 6 anpaßt und an diesem befestigt ist, wobei die dynamischen Kräfte im wesentlichen über die Punkte 32, 33 eingeleitet werden.

Natürlich kann insbesondere der hintere Endbereich 3 in Verbindung mit dem Heckformschnitt der Fahrgastzelle 1 sehr verschieden ausgelegt werden, wie das auch aus den Unterschieden nach Fig. 1 und Fig. 4 deutlich wird. So ist z. B. durch die Erfindung auch ein Pritschenfahrzeug realisierbar. Selbstverständlich können auch an den Endbereichen 2 bzw. 3 Türen bzw. Klappen vorgesehen sein, welche z. B. die Zugänglichkeit des Motor-Getriebe-Aggregates ermöglichen bzw. eine Belademöglichkeit von hinten eröffnen.

Nach Verbindung der Fahrgastzelle 1 mit den Endbereichen 2 und 3 ist die Fahrgastzelle 1 sowohl selbsttragend als auch trotz geringem Gewicht überaus formstabil. Sie bedarf kaum einer Sondermaßnahme zum Korrosionsschutz und sie ist in vollem Umfang recyclingfähig.

Eine so hergestellte Fahrgastzelle eignet sich besonders für die Nutzung an einem kleinen und leichten Fahrzeug, z. B. einem Stadtfahrzeug, da sie mit sehr geringen Kosten herstellbar ist und trotzdem alle Anforderungen, die an ein solches Fahrzeug gestellt werden, erfüllen kann.

## Patentansprüche

1. Selbsttragende formstabile Fahrgastzelle eines Personenkraftwagens, insbesondere eines Kleinwagens, mit daran angesetzten hinteren und vorderen Endbereichen, dadurch gekennzeichnet, daß die Fahrgastzelle (1) von einem rohrartigen Körper mit über dessen Länge gleichbleibendem rohrartigen Profil gebildet ist, dessen Wandung im Querschnitt gesehen festigkeitsbedingte unterschiedliche Dicken und Strukturen aufweist, an dessen Seiten die erforderlichen Öffnungen (Türöffnung 28; Seitenfensteröffnung 29) eingeschnitten sind und dessen vordere Stirnseite mit einem Frontformschnitt und dessen hintere Stirnseite mit einem Heckformschnitt versehen sind, wobei die Stirnseiten mittels der vorderen bzw. hinteren Endbereiche (2, 3) verschlossen sind.

2. Fahrgastzelle nach Anspruch 1, dadurch gekennzeichnet, daß sie aus längsverbundenen Leichtbauprofilen (11, 12, 13, 14, 15, 16, 17, 18) unterschiedlichen Querschnitts besteht, die gemeinsam einen rohrförmigen Körper gleichbleibenden Querschnitts bilden, wobei die Querschnitte der Leichtbauprofile (11, 12, 13, 14, 15, 16, 17, 18) den partiellen Festigkeitsanforderungen angepaßt sind und der rohrförmige Körper die für eine Fahrgastzelle (1) erforderlichen seitlichen Öffnungen (Türöffnung 28, Seitenfensteröffnung 29) aufweist.

3. Fahrgastzelle nach Anspruch 1, dadurch gekennzeichnet, daß die Leichtbauprofile (11, 12, 13, 14, 15, 16, 17, 18) in ihrem Querschnitt doppelwandig ausgebildet und mit Stegen zwischen den Wänden versehen sind.

4. Fahrgastzelle nach Anspruch 1 bis 3, dadurch gekennzeichnet, daß die Hohlräume der doppelwandigen Strukturen mit einem dämpfenden und isolierenden Schaum ausgefüllt sind.

5. Fahrgastzelle nach Anspruch 2 bis 4, dadurch gekennzeichnet, daß die Leichtbauprofile (11, 12, 13, 14, 15, 16, 17, 18) an ihren Rändern formschlüssig miteinander verbunden sind.

6. Fahrgastzelle nach Anspruch 2 bis 5, dadurch gekennzeichnet, daß ein erstes Leichtbauprofil (12) angeformte Paßfedern (19) und ein anderes Leichtbauprofil (13) angeformte Nuten (20) aufweist und beide Leichtbauprofile (12, 13) mit Paßfedern (19) und Nut (20) zusammengeschoben sind.

7. Fahrgastzelle nach Anspruch 2 bis 6, dadurch gekennzeichnet, daß zwischen den Leichtbauprofilen (11, 12, 13, 14, 15, 16, 17, 18) Klebstoff und/oder Dichtmaterial eingebracht ist.

8. Fahrgastzelle nach Anspruch 2 bis 7, dadurch gekennzeichnet, daß die Leichtbauprofile (11, 12, 13, 14, 15, 16, 17, 18) extrudierte Leichtmetallprofile sind.

9. Fahrgastzelle nach Anspruch 1 bis 8, dadurch gekennzeichnet, daß der rohrförmige Körper in an sich bekannter Weise verformbare Endbereiche (2, 3) trägt, welche gleichzeitig als Aggregateträger für Achsen, Motor und dgl. dienen, an Krafteinleitungspunkten (30, 31, 32, 33) mit der Fahrgastzelle (1) verbunden sind und die offenen Querschnitte des rohrförmigen Körpers der Fahrgastzelle (1) verschließen.

10. Fahrgastzelle nach Anspruch 1 bis 8, dadurch gekennzeichnet, daß der vordere Endbereich (2) neben den zur Aufnahme von Verformungsarbeit geeigneten Bauteilen einen Motor mit Getriebe, eine Vorderachse mit Lenkung, einen Spritzwandbereich, eine Armaturentafel, ein Heizungs- und Belüftungsaggregat, nach vorn führende Fahrzeugbedienelemente sowie eine Windschutzscheibe (23) umfaßt und deckelartig den vorderen Querschnitt des rohrförmigen Körpers der Fahrgastzelle (1) verschließt.

11. Fahrgastzelle nach Anspruch 1 bis 10, dadurch gekennzeichnet, daß der hintere Endbereich (3) neben den zur Aufnahme von Verformungsarbeit geeigneten Bauteilen einen Hinterachsschemel (24) mit einer Hinterachse (25) sowie eine Heckwand mit einer Heckscheibe umfaßt und deckelartig den hinteren Querschnitt des rohrförmigen Körpers der Fahrgastzelle (1) verschließt.

12. Verfahren zur Herstellung einer selbsttragenden formstabilen Fahrgastzelle eines Personenkraftwagens, insbesondere Kleinwagens, nach Anspruch 1, dadurch gekennzeichnet, daß ein rohrförmiger Querschnitt mit entsprechend den Festigkeitsanforderungen unterschiedlichen Wandstärken extrudiert wird, von dem extrudierten rohrförmigen Profil Teile in der für die Fahrgastzelle (1) gewünschten Länge abgetrennt werden, diese Teile mit einem Frontformschnitt und einem Heckformschnitt versehen werden, welche den Konturen eines vorderen bzw. hinteren Endbereiches (2, 3) entsprechen, die Endbereiche (2, 3) mit den beschnittenen Teilen des rohrförmigen Profils verbunden werden und in das Rohrprofil seitliche Öffnungen (Türöffnung 28, Fensteröffnung 29) eingeschnitten werden.

13. Verfahren zur Herstellung einer selbsttragenden formstabilen Fahrgastzelle eines Personenkraftwagens, insbesondere eines Kleinwagens, nach Anspruch 2 bis 11, dadurch gekennzeichnet, daß ein rohrförmiger Querschnitt mit entsprechend den Festigkeitsanforderungen unterschiedlichen Wandstärken und Versteifungsformen in mehrere Profilbereiche aufgeteilt ist, die den Querschnitt bildenden Profilbereiche als Leichtbauprofile (11, 12, 13, 14, 15, 16, 17, 18) gebildet sind, diese zu einem Rohrprofil gleichbleibendem Querschnitts zusammengefügt sind, von der Länge dieses Rohrprofils Teile in der Länge einer Fahrgastzelle (1) abgetrennt werden, an diesen Teilen jeweils ein Front- und ein Heckformschnitt erfolgt, welche den Konturen eines vorderen bzw. hinteren Endbereiches (2 bzw. 3) entsprechen, die Endbereiche (2, 3) mit den beschnittenen Teilen des Rohrprofils verbunden werden und in das Rohrprofil seitliche Öffnungen (Türöffnung 28, Fensteröffnung 29) eingeschnitten werden.

14. Verfahren nach Anspruch 12 und 13, dadurch gekennzeichnet, daß die aus den Türöffnungen (28) herausgeschnittenen Teile nach Bearbeitung der Randbereiche und Anordnung von Dichtungen, Fenstern, Türaufhängungselementen und Schlössern als Türen der Fahrgastzelle verwendet werden.

## Claims

1. Self-supporting, dimensionally stable passenger cell of a passenger carrying vehicle, in particular a small vehicle, with add-on rear and front regions, **characterised** in that the passenger cell (1) is formed of a tubular body having a tubular profile, which remains uniform over its length, whose wall cross-section has different thicknesses and structures determining its strength, into the sides of which are cut the required openings (door opening 28; side window opening 29) and whose forward end face is provided with a front cutaway and whose rear end face is provided with a rear cutaway, wherein the end faces are closed off by the front and rear end regions (2, 3).

2. Passenger cell according to claim 1, **characterised** in that it consists of longitudinally connected light construction profiles (11, 12, 13, 14, 15, 15, 17, 18) of varying diameter which together form a tubular body of constant diameter, whereby the cross-sections of the light construction profiles (11, 12, 14, 15, 16, 17, 18) are adapted to the partial strength requirements and the tubular body has the lateral openings (door opening 28, side window opening 29) required for a passenger cell (1).

3. Passenger cell according to claim 1, **characterised** in that the light construction profiles (11, 12, 13, 14, 15, 16, 17, 18) are designed to be double-walled in cross-section and have webs provided between the walls.

4. Passenger cell according to claim 1 to 3, **characterised** in that the hollow spaces in the double-walled structures are filled with a damping and insulating foam.

5. Passenger cell according to claim 2 to 4, **characterised** in that the edges of the light construction profiles (11, 12, 13, 14, 15, 16, 17, 18) are connected to each other in a form-locking manner.

6. Passenger cell according to claim 2 to 5, **characterised** in that a first light construction profile (12) has moulded-on locking members (19) and another light construction profile (13) has grooves (20) moulded on both light construction profiles (12, 13) slide together with locking members (19) and groove (20) interlocking.

7. Passenger cell according to claim 2 to 6, **characterised** in that adhesive material and/or sealing material is introduced between the light construction profiles (11, 12, 13, 14, 15, 17, 18).

8. Passenger cell according to claim 2 to 7, **characterised** in that the light construction profiles (11, 12, 13, 14, 15, 16, 17, 18) are extruded light metal profiles.

9. Passenger cell according to claim 1 to 8, **characterised** in that the tubular body carries end regions (2, 3) which are deformable in a known manner and which simultaneously serve as aggregate supports for axles, engine and the like, are connected to the passenger cell (1) at force transfer points (30, 31, 32, 33) and close the exposed cross-sections of the tubular body of the passenger cell (1).

10. Passenger cell according to claim 1 to 8, **characterised** in that apart from the parts used for receiving deforming work the forward end region (2) comprises an engine with transmission, a front axle with steering, a splashboard region, a dashboard, a heating ans air conditioning unit, forward extending vehicle operating elements as well as a windscreen (23) and in a lid-like manner closes the forward cross-section of the tubular body of the passenger cell (1).

11. Passenger cell according to claim 1 to 10, **characterised** in that apart from the parts used for absorbing the deforming work the rear end region (3) comprises a rear axle support (24) with a rear axle (25) as well as a rear wall with a rear windscreen and in a lidlike manner closes the rear cross-section of the tubular body.

12. Method for manufacturing a self-supporting dimensionally stable passenger cell of a passenger carrying vehicle, in particular a small vehicle, according to claim 1, **characterised** in that a tubular cross-section with different wall thicknesses corresponding to the required strengths is extruded, from the extruded tubular profile are separated parts having the desired length of the passenger cell (1), these parts are cut to shape at the front and rear so as to correspond to the contours of the front or rear end regions (2, 3), the end regions (2, 3) are connected to the trimmed part of the tubular profile and into the side of the tubular profile are cut openings (door opening 28, window opening 29).

13. Method for manufacturing a self-supporting dimensionally stable passenger cell of a passenger carrying vehicle, in particular a small vehicle, according to claim 2 to 11, **characterised** in that a tubular cross-section with different wall strengths and forms of stiffness corresponding to the strength requirements are split into several profile regions, the profile regions forming the cross-section are formed as light contruction profiles (11, 12, 13, 14, 15, 16, 17, 18), these are joined together to form a tubular profile of uniform cross-section, from the length of this tubular profile are separated parts having the length of a passenger cell (1), the front and rear of these part each being cut to section which corresponds to the contours of a front or rear end region (2 or 3), the end regions (2, 3) being connected to the trimmed parts of the tubular profile and into the tubular profile are cut lateral openings (door opening 28, window opening 29).

14. Method according to claim 12 and 13, **characterised** in that after preparing the edge regions and after fitting seals, windows, door hinges and locks the parts cut out of the door openings (28) are used for doors of the passenger cell.

## Revendications

1. Habitacle autoportant indéformable de voiture automobile particulière, en particulier de petite voiture, avec des zones d'extrémité arrière et avant rapportées, **caractérisé** par le fait que l'habitacle (1) est constitué par un corps tubulaire avec un profil tubulaire constant sur toute sa longueur, dont la paroi, vue en section, présente des épaisseurs et structures différentes du point de vue résistance, dans les côtés duquel sont découpées les ouvertures nécessaires (ouvertures de portes 28, ouvertures de fenêtres latérales 29), et dont le côté frontal avant est muni d'une découpe de forme avant et le côté frontal arrière d'une découpe de forme arrière, les côtés frontaux étant fermés à l'aide des zones d'extrémité avant et arrière (2, 3).

2. Habitacle suivant revendication 1, **caractérisé** par le fait qu'il est constitué de profilés légers (11, 12, 13, 14, 15, 16, 17, 18) de sections différentes, reliés entre eux longitudinalement et constituant ensemble un corps tubulaire de section constante, les sections des profilés légers (11, 12, 13, 14, 15, 16, 17, 18) étant adaptées aux exigences de résistance partielle et le corps tubulaire présentant les ouvertures latérales (ouvertures de portes 28, ouvertures de fenêtres latérales 29) nécessaires pour un habitacle (1).

3. Habitacle suivant revendication 1, **caractérisé** par le fait que les profilés légers (11, 12, 13, 14, 15, 16, 17, 18) sont, en section, à doubles parois et munis d'entretoises entre les parois.

4. Habitacle suivant revendication 1 à 3, **caractérisé** par le fait que les cavités des structures à doubles parois sont remplies d'une mousse amortissante et isolante.

5. Habitacle suivant revendication 2 à 4, **caractérisé** par le fait que les profilés légers (11, 12, 13, 14, 15, 16, 17, 18) sont reliés entre eux par complémentarité de forme sur leurs bords.

6. Habitacle suivant revendication 2 à 5, **caractérisé** par le fait qu'un premier profilé léger (12) présente des languettes (19) et un autre profilé léger (13) des rainures (20) et que les deux profilés légers (12, 13) sont assemblés par emboîtement des languettes (19) et des rainures (20).

7. Habitacle suivant revendication 2 à 6, **caractérisé** par le fait qu'un adhésif et/ou une matière d'étanchéité est introduit entre les profilés légers (11, 12, 13, 14, 15, 16, 17, 18).

8. Habitacle suivant revendication 2 à 7, **caractérisé** par le fait que les profilés légers (11, 12, 13, 14, 15, 16, 17, 18) sont des profilés extrudés en métal léger.

9. Habitacle suivant revendication 2 à 8, **caractérisé** par le fait que le corps tubulaire porte des zones d'extrémité (2, 3) déformables de façon connue en soi servant simultanément de supports pour les essieux, le moteur et les groupes analogues, reliées en des points d'application de forces (30, 31, 32, 33) à l'habitacle (1) et fermant les sections ouvertes du corps tubulaire de l'habitacle (1).

10. Habitacle suivant revendication 2 à 8, **caractérisé** par le fait que la zone d'extrémité avant (2) comprend, outre des parties susceptibles d'absorber de l'énergie par déformation, un moteur avec transmission, un essieu avant avec direction, une zone de tablier avant, un tableau de bord, un groupe de chauffage et de ventilation, des éléments de commande de véhicule menant vers l'avant ainsi qu'un pare-brise (23) et ferme à la manière d'un couvercle la section avant du corps tubulaire de l'habitacle (1).

11. Habitacle suivant revendication 2 à 10, **caractérisé** par le fait que la zone d'extrémité arrière (3) comprend, outre des parties susceptibles d'absorber de l'énergie par déformation, un support d'essieu arrière (24) avec un essieu arrière (25) ainsi qu'une paroi arrière avec une lunette arrière et ferme à la manière d'un couvercle la section arrière du corps tubulaire de l'habitacle (1).

12. Procédé de fabrication d'un habitacle autoportant indéformable d'une voiture automobile particulière, notamment d'une petite voiture, suivant revendication 1, **caractérisé** par le fait qu'une section tubulaire est extrudée avec des épaisseurs de parois différentes en fonction des exigences de rigidité, que des parties ayant la longueur requise pour l'habitacle (1) sont sectionnées du profilé tubulaire extrudé, que ces parties sont munies d'une découpe frontale de forme et d'une découpe arrière de forme qui correspondent aux contours d'une zone d'extrémité avant et d'une zone d'extrémité arrière (2, 3), que les zones d'extrémité (2, 3) sont reliées aux parties découpées du profilé tubulaire et que les ouvertures latérales (ouvertures de portes 28, ouvertures de fenêtres 29) sont découpées dans le profilé tubulaire.

13. Procédé de fabrication d'un habitacle autoportant indéformable d'une voiture automobile particulière, notamment d'une petite voiture, suivant revendication 2 à 11, **caractérisé** par le fait qu'une section tubulaire ayant des épaisseurs de parois différentes en fonction des exigences de rigidité et des formes de raidissement est subdivisée en plusieurs zones de profilés, les zones de profilés constituant la section sont constituées par des profilés légers (11, 12, 13, 14, 15, 16, 17, 18), ces profilés légers sont réunis sous la forme d'un profilé tubulaire de section constante, des parties ayant la longueur d'un habitacle (1) sont sectionnées à partir de ce profilé tubulaire, une découpe de forme avant et une découpe de forme arrière sont effectuées sur lesdites parties, découpes correspondant aux contours d'une zone d'extrémité avant et d'une zone d'extrémité arrière (2, 3), les zones d'extrémité (2, 3) sont reliées aux parties découpées du profilé tubulaire et des ouvertures latérales (ouvertures de portes 28, ouvertures de fenêtres 29) sont découpées dans le profilé tubulaire.

14. Procédé suivant revendication 12 et 13, **caractérisé** par le fait que les parties obtenues par découpage des ouvertures de portes (28) sont utilisées, après façonnage des zones marginales et mise en place de joints, fenêtres, éléments de suspension de portes et serrures, en tant que portes pour l'habitacle.
